# EUROPÄISCHE PATENTSCHRIFT

(11) **EP 1 537 390 B1**
(45) Veröffentlichungstag und Bekanntmachung des Hinweises auf die Patenterteilung: **02.01.2008**
(21) Anmeldenummer: 03795026.8
(22) Anmeldetag: 05.09.2003
(51) Int. Cl.: G01H 11/06, G01H 1/00, G01H 1/10, G01R 31/34

(54) **VERFAHREN ZUR ERFASSUNG VON SCHWINGUNGEN DES WELLENSTRANGES AN EINER ELEKTRISCHEN MASCHINE**
METHOD FOR DETECTING OSCILLATIONS OF THE SHAFTING OF AN ELECTRIC MACHINE
PROCEDE POUR SAISIR DES OSCILLATIONS DE LA LIGNE D'ARBRES D'UNE MACHINE ELECTRIQUE

(30) Priorität: 10.09.2002 CH 15292002
(43) Veröffentlichungstag der Anmeldung: 08.06.2005
(73) Patentinhaber: Alstom Technology Ltd, 5401 Baden (CH)
(72) Erfinder: HOBELSBERGER, Max, CH-5303 Würenlingen (CH); KIRCHHOFF, Ingo, CH-5454 Bellikon (CH); POSEDEL, Zlatimir, CH-5432 Neuenhof (CH)
(86) Internationale Anmeldenummer: PCT/EP2003/050610
(87) Internationale Veröffentlichungsnummer: WO 2004/025232

(56) Entgegenhaltungen:
- EP-A- 0 271 678
- WO-A-00/69062
- DE-A- 19 742 622
- US-A- 3 934 459
- BAI M R ET AL: "DEVELOPMENT OF AN ON-LINE DIAGNOSIS SYSTEM FOR ROTOR VIBRATION VIA MODEL-BASED INTELLIGENT INFERENCE" JOURNAL OF THE ACOUSTICAL SOCIETY OF AMERICA, AMERICAN INSTITUTE OF PHYSICS. NEW YORK, US, Bd. 107, Nr. 1, Januar 2000 (2000-01), Seiten 315-323, XP000923690 ISSN: 0001-4966

## Beschreibung

### TECHNISCHES GEBIET

Die vorliegende Erfindung betrifft ein Verfahren zum Erfassen von Schwingungen der Welle einer elektrischen Maschine gemäss dem Oberbegriff des unabhängigen Patentanspruchs 1

### STAND DER TECHNIK

Schwingungen des Wellenstranges einer Maschine, insbesondere eines Turbogeneratorstranges, können unterschiedlicher Natur sein. Es kann sich dabei um Biegeschwingungen beziehungsweise transversale Vibrationen handeln, welche in senkrechter Richtung zur Welle auftreten. Weiterhin können so genannte Pendelungen auftreten, d. h. in der Regel quasi-periodisch-gedämpfte Änderungen der Dreh-Frequenz der Welle um die Netzfrequenz von üblicherweise 50 Hz (respektive 60 Hz), welche durch z. B. stossartige Störungen im Netz erzeugt werden. Als dritten Typ von Schwingungen der Welle kennt man die eigentlichen Torsionsschwingungen, welche z. B. durch plötzliche Lasterhöhungen am Netz erzeugt werden können. Torsionsschwingungen sind dabei Schwingungen, welche sich in einer uneinheitlichen Rotationsfrequenz entlang der Welle (Phasenverschiebungen respektive Frequenzverschiebungen) manifestieren, d. h. eine Torsion der Welle bewirken.
Bei den Torsionsschwingungen handelt es sich um sehr kleine Schwingungen, üblicherweise im Bereich von 0.01 Grad Phasenamplitude, welche aber dennoch zu einer sehr hohen Belastung der Welle führen können, und insbesondere ein Zusammenfallen der Eigenfrequenz einer derartigen Torsionsschwingung mit dem diese anregenden Stimulus kann zu einem gefährlichen Aufschaukeln von derartigen Torsionsschwingungen führen, was sogar in einem Bruch der Welle resultieren kann. Torsionsschwingungen können dabei Frequenzen von wenigen Hz bis zu 200 Hz haben, wobei die Frequenz natürlich von der Materialbeschaffenheit und Dicke der Welle, der mit der Welle verbundenen Massen und der Grösse der Anlage abhängt. Insbesondere bei grossen Anlagen mit langen Wellen können diese Torsionsschwingungen äusserst kritisch werden.
Der Wichtigkeit dieser Problematik entsprechend haben sich bereits eine Vielzahl von Patentschriften mit diesem Thema beschäftigt. So beschreibt z. B. die US 3,934,459 ein Messgerät respektive ein Verfahren zur Messung der Torsionsschwingungen des gesamten Wellenstranges eines Turbinen-Generator-Systems. Dazu werden über einen oder mehrere nicht näher spezifizierte Sensoren die Torsionsschwingungen an einem oder mehreren Punkten der Welle aufgenommen.

Die Weiterverarbeitung der Torsionssignale ist das Hauptthema dieser Schrift. Die Weiterverarbeitung erfolgt durch Filterung mit Bandfiltern und Multiplikationen, um am Ende die maximalen Torsionsmomente zu ermitteln.
WO 00/69062 beschreibt ein Überwachungssystem, mit welchem Probleme bei Wellen von Rotationsmaschinen früh erkannt werden können. Die Probleme werden anhand von Messungen und der Analyse des Wellenstroms oder der Wellenspannung erkannt.
Die Publikation "Bai M.R. et al "Development of an on-line diagnosis system for rotor vibration via model-based intelligen inference" ; Journal of the Acoustical Society of America, American Institut of Physics, New York, US, vol 107, no.1 January 2000 (2000-01); p. 315-322, offenbart ein DiagnoseSystem, mit welchem auf der Basis der Messung von Vibrationen auf den Zustand bzw. auf Defekte bei Rotationsmaschinen geschlossen wird.

Ausserdem seien die US 3,885,420, die US 4,148,222, die US 4,137,780, und die US 4,317,371 erwähnt, welche allesamt Messgeräte beziehungsweise Methoden zur Messung von Torsionsschwingungen von derartigen elektrischen Anlagen beschreiben. Zur Erfassung der Torsionsschwingungen werden mit der Welle verbundene Zahnräder als Signalgeber verwendet, die über Sensoren elektrische Signale erzeugen. Die Signale werden mittels Bandfiltern und Multiplikatoren etc. weiterverarbeitet. In der US 4,317,371 wird eine spezielle Demodulationsmethode zur Messung von Phasenverschiebungen beschrieben. Die Methode umfasst die Erzeugung von niedrigeren Zwischenfrequenzen und die anschliessende Frequenzdemodulation, wie es an sich aus der Rundfunktechnik bekannt ist. Ein anderes Verfahren (US 3,885,420) benützt eine PPL (phase-locked-loop) Schleife zur Demodulation. Ausserdem sei auf die US 4,444,064 hingewiesen, welche eine Methode beschreibt, in der zunächst ein magnetisches Muster in die Welle eingeprägt wird, das danach als Impulsgeber benützt wird. Ein anderes Konzept der Messung von Torsionsschwingungen beruht darauf, dass die Spannung an den Phasenwicklungsklemmen des Permanentmagnetgenerators, der mit der Welle gekoppelt ist, zur Ermittlung derartiger Schwingungen verwendet werden. Durch Auswertung der erzeugten Spannungen wird auf die Torsionsschwingungen geschlossen. Die Auswertung erfolgt wiederum mittels Frequenzdemodulation (PPL-Technik). Als Vorteil dieser Anordnung werden kleinere Kosten im Vergleich mit der Zahnrad-Lösung genannt.

### DARSTELLUNG DER ERFINDUNG

Der Erfindung liegt demnach die Aufgabe zugrunde, ein alternatives Verfahren zur Erfassung von z.B. Torsionsschwingungen, des Wellenstranges einer Maschine zur Verfügung zu stellen, welche über eine ausreichende Genauigkeit verfügt und dabei konstruktiv einfach, billig und robust zu realisieren ist. Insbesondere sollen die im Betrieb schwer messbaren Eigenfrequenzen des Wellenstranges erfasst werden, speziell auch deren Veränderungen im Laufe der Zeit.
Die Lösung dieser Aufgabe wird mit einem Verfahren erreicht, das die Merkmale des kennzeichnenden Teils des unabhängigen Anspruchs 1 aufweist. Die abhängigen Ansprüche beziehen sich auf vorteilhafte Weiterbildungen der Erfindung.
Wie zum Beispiel in der Druckschrift EP-A1-0 271 678 und der späteren Druckschrift DE-A1-197 42 622 beschrieben, treten an der Generatorwelle eines Generators, der üblicherweise Teil einer Turbogruppe ist, aus verschiedenen Gründen Wellenspannungen und Wellenströme auf, deren Frequenzspektrum vom Gleichstrom bis zu höheren Frequenzen reicht, die als Vielfache mit der Rotationsfrequenz des Generators, aber auch mit den Frequenzen eines statischen Erregungssystems des Generators zusammenhängen. Dabei sind im Spektrum der primär periodischen Funktion (Periode = Rotordrehfrequenz) ausgeprägte Harmonische der Grundfrequenz zu beobachten.
Die Wellenspannungen respektive Wellenströme kommen unter anderem auf Grund magnetischer Asymmetrien der Umgebung der Generatorwelle, auf Grund von elektrostatischen Aufladungen der Generatorwelle, auf Grund von äusseren elektrischen Feldern, die Wellenspannungen kapazitiv in die Generatorwelle einkoppeln, oder auf Grund von magnetischen Remanenzen in der rotierenden Welle, z. B. auf Grund von Restmagnetisierung der Welle, zu Stande.
Die Wellenspannungen und Wellenströme stellen grundsätzlich ein Gefahrenpotenzial für verschiedene Komponenten des Generators dar und können zu Schäden am Generator führen, wenn sie entweder nicht auf ein tolerierbares Mass reduziert werden, oder aber das Erdungskonzept des Wellenstranges nicht geeignet ist. Hierzu wurden in der Vergangenheit an der Generatorwelle spezielle Vorkehrungen getroffen, indem beispielsweise auf der Nichtantriebsseite des Generators Isolierstrecken eingebaut und auf der Antriebsseite die Generatorwelle über Bürsten mit dem Erdpotential verbunden wurde. Um Spannungsspitzen zu verkleinern, wird oft die Generatorwelle an der Nichtantriebsseite mittels eines Gleitkontaktes über eine Kapazität wechselspannungsmässig an das Erdpotential angekoppelt.
Die Wellenspannungen und Wellenströme können aber auch zur Überwachung der Funktionssicherheit und Funktionstüchtigkeit der Wellenerdung herangezogen werden. Die eingangs genannte Druckschrift EP-A1-0 271 678 gibt dazu eine Überwachungs- und Auswerteschaltung an, die auf der Nichtantriebsseite des Generators durch Parallelschaltung eines Widerstandes zur Ableitungskapazität einen Strompfad schafft und maschinentypische Frequenzkomponenten in den durch diese RC-Kombination fliessenden Strömen auswertet. Die RC-Kombination ergibt eine zuverlässige Verbindung zwischen Welle und Erdpotential, welche sowohl statische Aufladungen als auch höherfrequente Spannungen auf für die Wellenlager ungefährliche Beträge reduziert.
Ein anderer Vorschlag (DE-A1-197 42 622) geht dahin, auf der Antriebsseite den durch eine Erdungsstrecke der Generatorwelle fliessenden Wellenstrom zu messen und eine Frequenz des Wellenstromes zu bestimmen, aus der dann die Ursache des Wellenstromes abgeleitet wird.
Der Kern der Erfindung besteht nun in der durchaus überraschenden Erkenntnis, dass der Wellenstrom respektive die Wellenspannung nicht nur die obengenannte Information gemäss der EP-A1-0 271 678 über die Funktionstüchtigkeit und die Funktionssicherheit der Wellenerdung enthält, oder auch die Information gemäss der ausserdem zu nennenden EP-A2-0 391 181 über Rotorwindungsschlüsse enthält, sondern dass in diesen Signalen ausserdem umfangreiche Information über alle Arten von Schwingungen der Welle enthalten sind. Entsprechend ist es möglich, auf die üblicherweise für die Messung derartiger Schwingungen speziell vorzusehenden Vorrichtungen zu verzichten, und Wellenspannung respektive Wellenstrom mit den gegebenenfalls bereits vorhandenen Geräten zur Überwachung der Funktionstüchtigkeit oder der Rotorwindungsschlüsse zu messen und aus den dabei erhaltenen Daten Rückschlüsse über Schwingungen der Welle zu machen. Die Messung von Wellenstrom und/oder Wellenspannung ist dabei eine hinreichend genaue und speziell für Langzeitbeobachtungen sehr geeignete Methode zur Ermittlung von derartigen Schwingungen der Welle.
Gemäss einer ersten bevorzugten Ausführungsform des erfindungsgemässen Verfahrens handelt es sich bei den erfassten Schwingungen um Torsionsschwingungen, und/oder transversale Biegeschwingungen und/oder um Pendelungen der Welle. Dabei kann nicht nur die Gegenwart eines spezifischen Typs von individuellen Schwingungen festgestellt werden, sondern auch deren zeitliche Abfolge und Stärke.
Gemäss einer weiteren bevorzugten Ausführungsform erfolgt die Messung von Wellenspannung und/oder Wellenstrom derart, dass an einer ersten Stelle, vor dem Generator, der Welle eine niederohmige Erdung vorgesehen ist, und dass an einer zweiten Stelle, hinter dem Generator, der Welle über eine Einheit, z. B. eine hochohmige RC-Einheit zwischen Welle und Erde, die Wellenspannung, d. h. die Spannung zwischen Welle und Erde, und/oder Wellenstrom, d. h. der nach Erde fliessende Strom, abgegriffen und in einer Analyseeinheit analysiert werden. Insbesondere bevorzugt wird dabei zur Analyse von Wellenspannung und/oder Wellenstrom das Signal als Funktion der Zeit gemessen und aufgezeichnet, und als Funktion der Zeit analysiert. Die Abtastung kann dabei mit einer Abtastrate erfolgen, die der Netzfrequenz entspricht oder ganzzahligen Vielfachen der Netzfrequenz geteilt durch die Polpaarzahl des Generators. Es wird bevorzugt das resultierende Signal (Spannung oder Strom) in Bezug auf darin enthaltene Frequenzmodulationen und/oder Amplitudenmodulationen der Harmonischen des Wellenspannungs/strom-Spektrums untersucht. Bevorzugtermassen wird dabei, gegebenenfalls nach Demodulation respektive Heruntermischen des Signals mit einer Trägerfrequenz, insbesondere mit der Netzfrequenz oder deren Harmonischen, abschnittsweise fouriertransformiert, und das resultierende Spektrum auf Linienverbreiterungen der Harmonischen, im Fall von Frequenzmodulationen, respektive auf Seitenbänder, oder auch Bänder im Basisband, im Fall von Amplitudemodulationen, analysiert. Diese Art der Analyse erlaubt eine einfache Visualisierung der entsprechenden, für spezifische Schwingungen charakteristisch zeichnenden Signale.
Bei Verwendung einer Fouriertransformation erweist es sich als geeignet, das Signal mit einer Abtastrate von 1-10 kHz zu digitalisieren, insbesondere im Bereich von 5 kHz abzutasten, und anschliessend für die Ermittlung von Feinstrukturen, wie sie bei Pendelungen und/oder Torsionen auftreten, vom Signal jeweils Abschnitte von im Bereich von 50k bis 100k Datenpunkte, insbesondere im Bereich von 64k Datenpunkte einer Fouriertransformation (FFT) zu unterziehen. Für die sich als Amplitudenmodulation im Bereich von 1 bis 180 Hz, oder sogar bis 300 Hz, äussernden Biegeschwingungen können jeweils Abschnitte von im Bereich von 0.5k bis 1.5k Datenpunkte, insbesondere im Bereich von 1 k Datenpunkte fouriertransformiert (FFT) werden.
Grundsätzlich zeigt sich, dass bei Vorliegen von transienten, transversalen Biegeschwingungen im Spektrum transiente Linien bei Frequenzen im Bereich von 1 bis 300 Hz beobachtet werden, dass beim Vorliegen von Pendelungen Verbreiterungen der Linie bei der Netzfrequenz respektive bei deren harmonischen Vielfachen beobachtet werden können, wobei die Verschiebungen im Bereich von 2-4 Promille der entsprechenden Frequenz liegen und auf einer Zeitskala von bis zu 1 sec auftreten. Im Gegensatz dazu werden beim Vorliegen von Torsionsschwingungen üblicherweise Phasenmodulationen mit einer Geschwindigkeit im Bereich von ca. 50 bis 200 Hz beobachtet.
Unter Erfassung und Analyse der Schwingungen der Welle ist normalerweise zu verstehen, dass aus der Wellenspannung (Uₛ(t)) und/oder dem Wellenstrom (Iₛ(t)) Schwingungskennwerte bestimmt werden. Es handelt sich bei diesen Schwingungskennwerten bevorzugt um Schwingungseigenfrequenzen, d.h. um Resonanzfrequenzen. In Frage kommen dabei insbesondere a) horizontale und/oder vertikale biegekritische Eigenfrequenzen, und/oder b) Torsionseigenfrequenzen, und/oder c) Pendelungseigenfrequenzen. Optional können zusätzlich Amplitude und Phase bei den Eigenfrequenzen ermittelt und analysiert werden. Alle diese Eigenfrequenzen oder Moden können Werte annehmen, welche im Bereich der Nenndrehzahl, d.h. im Bereich von 50 oder 60 Hz liegen. Auch können Eigenfrequenzen vorhanden sein, deren harmonische Vielfache in diesen Bereich zu liegen kommen. Beispielsweise können bis zu 20 Torsionsmoden auftreten mit Frequenzen kleiner oder gleich 50 Hz, d.h. die Eigenfrequenzdichte kann erheblich sein.
Um ein schädliches Aufschaukeln von derartigen Schwingungen zu verhindern resp. zu überwachen, sollten insbesondere keine Eigenfrequenzen von nachteiligen Schwingungen in der Umgebung der Nenndrehzahl vorhanden sein. Entsprechend erweist es sich als vorteilhaft, Schwingungseigenfrequenzen dann als kritisch einzustufen, wenn sie oder deren harmonische Vielfache im Bereich von +/- 10% der Nenndrehzahl, bevorzugt im Bereich von +/- 5% der Nenndrehzahl von normalerweise 50 oder 60 Hz liegen. Die Breite des Fensters, welches resonanzfrei sein sollte, ergibt sich dabei natürlich aus den normalerweise maximal auftretenden Abweichungen von der Nenndrehzahl.

Bei einer Vorrichtung zur Durchführung eines Verfahrens, wie es oben beschrieben wurde, ist z.B. an einer ersten Stelle der Welle eine niederohmige Erdung der Welle vorgesehen, und an einer zweiten Stelle der Welle ist eine hochohmige RC-Einheit zwischen Welle und Erde vorgesehen, über welcher RC-Einheit Wellenspannung und/oder Wellenstrom abgegriffen und in einer Analyseeinheit auf Komponenten analysiert werden, welche für Schwingungen der Welle charakteristisch sind. Insbesondere bevorzugt wird dabei die niederohmige Erdung über das so genannte Driving End Module (DE-Modul), d. h. über einen niederohmigen Widerstand zur Kontaktvorrichtung an die Welle realisiert, wobei in Serie noch eine Sicherung angeordnet ist. An der eigentlichen Messstelle erweist es sich als vorteilhaft, die RC-Einheit einzufügen, die über eine Sicherung zur Kontaktvorrichtung an die Welle verfügt, welche zur Erde über eine oder mehrere (gegebenenfalls zuschaltbare) Kapazitäten sowie parallel dazu über einen Widerstand verbunden ist, wobei zwischen Erde und Kapazität respektive Widerstand ein Messwiderstand (shunt-resistance) angeordnet ist. Dabei wird die Wellenspannung zwischen Sicherung und Erde, und der Wellenstrom indirekt über dem Messwiderstand gemessen. Da die sichere und zuverlässige Kontaktierung der Welle für die Qualität der Daten und damit deren Interpretation sehr wichtig ist, erweist es sich als vorteilhaft, jeweils eine Metalllitze als Kontaktvorrichtung zu verwenden, dies unabhängig von der Ausgestaltung der Kontaktmoduls (DE-Modul, RC-Modul).
Dabei wird die gemessene Wellenspannung respektive der gemessene Wellenstrom mit Vorteil als Funktion der Zeit detektiert und einer Analysevorrichtung zugeführt, wobei die Analysevorrichtung Mittel zur Digitalisierung des Signals (Spannung, Strom), Mittel zur Fouriertransformation dieses digitalisierten Signals, sowie Mittel zur spektralen Darstellung der transformierten Daten aufweist, wobei insbesondere bevorzugt zusätzlich numerisch nach bestimmten Kriterien die Anwesenheit, Art und Intensität von Schwingungen der Welle automatisch bestimmt und vereinfacht dargestellt wird. Bei den Kriterien handelt es sich dabei um die obengenannte charakteristischen spektralen Eigenschaften der einzelnen Schwingungen.

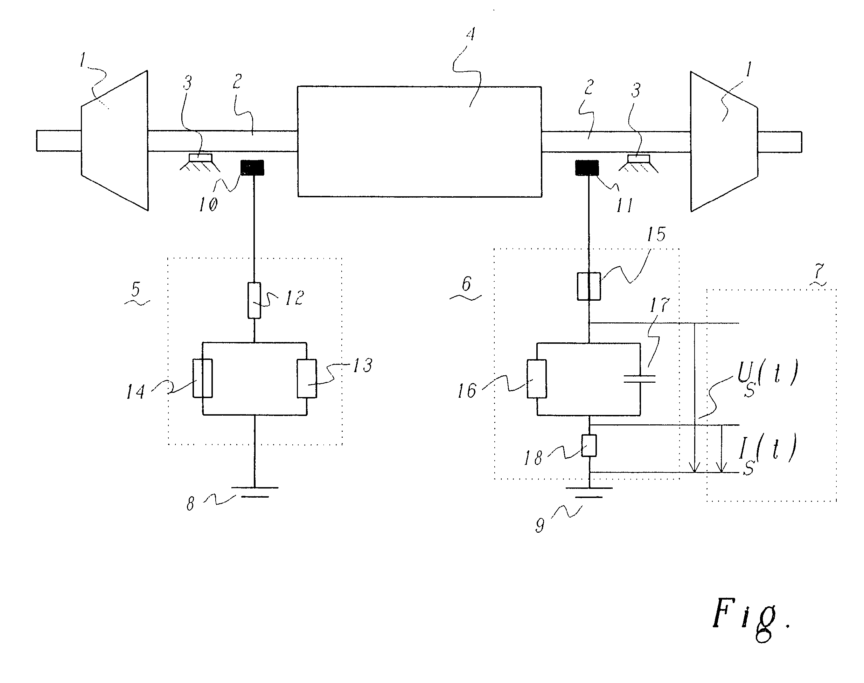

### KURZE ERLÄUTERUNG DER FIGUR

Die Erfindung soll nachfolgend anhand von Ausführungsbeispielen im Zusammenhang mit der Zeichnung näher erläutert werden. Die einzige Fig. zeigt eine schematische Darstellung einer Vorrichtung zur Messung von Wellenspannung Uₛ(t) respektive Wellenstrom Iₛ(t) als Funktion der Zeit (t).

### WEGE ZUR AUSFÜHRUNG DER ERFINDUNG

Die Figur zeigt eine schematische Darstellung einer Gasturbinenanlage, bei welcher zwei Turbinen 1 auf den beiden Seiten eines Generators 4 angeordnet sind, wobei die beiden Turbinen 1 wie auch der Generator 4 auf einer gemeinsamen Welle 2 bzw. einem Wellenstrang angeordnet sind. Die zwei Turbinen sind dabei nur beispielhaft zu verstehen, es ist auch möglich, dass nur eine Turbine angeordnet ist. Um den Generator 4 z. B. beim Hochfahren von den Turbinen 1 trennen zu können, sind üblicherweise Kupplungen vorgesehen, welche eine mechanische Entkopplung der Turbinen 1 vom Generator 4 erlauben.
Die Welle 2 ist auf wenigstens zwei Wellenlagern 3 gelagert. Die in den Lagern 3 vorliegenden Ölfilme isolieren die Welle 2 elektrisch von den mit der Erde in Verbindung stehenden Lagern 3. Diese Isolation kann aber bei Spannungsspitzen ab einer bestimmten Höhe zusammenbrechen, was zu Problemen mit Elektroerosion führen kann.
Wie bereits eingangs erwähnt, treten an einer derartigen Generatorwelle eines Generators 4 aus verschiedenen Gründen Wellenspannungen und Wellenströme auf, deren Frequenzspektrum vom Gleichwert bis zu Frequenzen reicht, die als Vielfache mit der Rotationsfrequenz des Generators, aber auch mit den Frequenzen eines statischen Erregungssystems des Generators zusammenhängen.
Die Wellenspannungen respektive Wellenströme kommen unter anderem auf Grund magnetischer Asymmetrien der Umgebung der Welle 2, auf Grund von elektrostatischen Aufladungen der Welle 2, auf Grund von äusseren elektrischen Feldern, die Wellenspannungen kapazitiv in die Welle 2 einkoppeln, oder auf Grund von magnetischen Remanenzen in der rotierenden Welle 2, sowie auf Grund von Restmagnetisierung (herstellungsbedingt) der Welle 2 zu Stande.
Die Wellenspannungen, üblicherweise und im folgenden als Uₛ bezeichnet, und Wellenströme, üblicherweise und im Folgenden als Iₛ bezeichnet, stellen grundsätzlich eine Gefahr für verschiedene Komponenten des Generators dar und können zu Schäden am Generator führen. Erfindungsgemäss wird nun aber die Wellenspannung respektive der Wellestrom zur gezielten Analyse und Erfassung von Schwingungen der Welle einer elektrischen Maschine verwendet.
Dazu wird auf der einen Seite des Generators 4 eine niederohmige Erdung 5, z. B. ein so genanntes DE-Modul 5 (Driving End Module) an der Welle 2 angeschlossen, welches im wesentlichen eine gesicherte Erdung der Welle 2 zur Erde 8 gewährleistet. Auf der anderen Seite des Generators 4 wird ein so genanntes RC-Modul 6 (R für Widerstand, C für Kapazität), welches mit einer Analyseeinheit 7 verbunden ist, einerseits mit der Welle 2 verbunden und andererseits auf Erde 9 gelegt.
Das DE-Modul 5 ist über eine Kontaktvorrichtung 10 mit der Welle 2 verbunden. Bei der Kontaktvorrichtung handelt es sich vorzugsweise um ein Cu-Geflecht, welches schleifend mit der Welle 2 in elektrischem Kontakt steht. Das DE-Modul 5 ist niederohmig zur Erde 8 ausgebildet, indem zwischen Kontaktvorrichtung 10 und Erde 8 zunächst ein niederohmiger Widerstand 12 geschaltet ist. Typischerweise weist der Widerstand 12 einen Wert von R im Bereich von 1 bis 10 Ohm auf. Damit gewährleistet das DE-Modul 5 zunächst eine niederohmige Erdung der Welle 2.
Auf der anderen Seite des Generators 4 ist üblicherweise zur Ableitung von HF-Spitzen das RC-Modul 6 angeordnet. Dieses verfügt ebenfalls zur Welle 2 über eine Kontaktvorrichtung 11, welche wiederum bevorzugt in Form eines Cu-Geflechts, welches in elektrischem Kontakt mit der Welle 2 steht, ausgebildet ist. Das RC-Modul 6 weist zunächst zur Welle eine Sicherung 15 auf, üblicherweise eine Sindcherung des Typs 2AT (auch hier dient die Sicherung zum Schutz vor hohen Strömen), und in Serie dazu einen Widerstand 16, zu welchem parallel eine als Kondensator ausgebildete Kapazität 17 angeordnet ist. Ganz allgemein weist der parallel zur Kapazität 17 angeordnete Widerstand 16 einen Wert R von im Bereich von 100 bis 10000 Ohm auf, bevorzugt von 400 bis 1000 Ohm. Die Kapazität 17 weist einen Wert C von typischerweise im Bereich von 1 bis 30 F auf.

Zwischen Sicherung und Erde wird nun die Wellenspannung Uₛ(t) als Funktion der Zeit abgegriffen, und über Koaxialkabel der Analyseeinheit 7 übergeben. Zwischen dem Erdpunkt 9 und der parallelen Anordnung von Widerstand 16 und Kapazität 17 befindet sich ausserdem ein Messwiderstand 18 (shunt resistance), bei welchem über den darüber auftretenden Spannungsabfall der Wellenstrom Iₛ(t) berechnet und mitgeschrieben werden kann. Auch diese Information wird über ein Koaxialkabel an die Analyseeinheit 7 übergeben.
Die gemessene Wellenspannung als Funktion der Zeit, Uₛ(t), respektive der gemessene Wellenstrom als Funktion der Zeit, Iₛ(t) enthält nun Informationen über alle Bewegungen der Welle. Es handelt sich dabei um Vibrationen wie transversale Biegeschwingungen der Welle 2 (Bewegung Typ A), um Pendelungen der Welle 2 (Bewegung Typ B), oder um Torsionsschwingungen der Welle 2 (Bewegung Typ C). Pendelungen sind in diesem Zusammenhang Änderungen der Rotationsgeschwindigkeit des Rotors um die eigentliche Nennfrequenz herum. Sie kommen z. B. zu Stande, wenn im Netz, welches üblicherweise bei 50 oder 60 Hz betrieben wird, Störungen auftreten, welche in die Bewegung des Rotors einkoppeln und diese z. B. verlangsamen. Dies führt dann eben zu einer Pendelung der Rotorfrequenz um die Nennfrequenz herum, was insbesondere dann kritisch werden kann, wenn es sich bei dieser Pendelung um eine Eigenfrequenz des Systems handelt, da dann ein Aufschaukeln möglich wird. Torsionsschwingungen treten z. B. dann auf, wenn am Netz eine plötzliche Lasterhöhung auftritt, und durch diese Lasterhöhung der Generator kurz gewissermassen abgebremst wird (was natürlich auch wieder Pendelungen bewirkt).
Die Auswertung von Wellenstrom respektive Wellenspannung erlaubt die Diagnose von allen drei Bewegungstypen A, B, respektive C. Zur Messung von Torsionsschwingungen (Typ C) und Pendelungen (Typ B) können dabei bevorzugt Verfahren zur Frequenzdemodulation verwendet werden, welche unempfindlich gegenüber Amplitudenschwankungen sind. Zur Messung von Biegeschwingungen (Typ A) können Verfahren zur Amplitudendemodulation verwendet werden. In beiden Fällen können dabei eine Vielzahl von Harmonischen des Wellensignals verwendet werden.

Als besonders geeignet für die Analyse erweist sich die Auswertung mit Hilfe einer Fouriertransformation des Zeitsignals Uₛ(t) oder Iₛ(t). Zur Erhöhung der Messgenauigkeit respektive zur Vereinfachung der Filterung der Eingangsdaten kann das entsprechende Zeitsignal mit einem Trägersignal (Carrier) respektive mit dem entsprechenden um π/2 geschobenen Trägersignal im Sinne einer Quadraturdetektion gemischt werden und in einem separaten Real- respektive Imaginär-Teil gespeichert und fouriertransformiert (FFT) werden. Als Trägersignal eignet sich z. B. die Netzfrequenz, oder deren ganzzahlige Vielfache, welche dazu gegebenenfalls direkt vom Netz oder an einem geeigneten anderen Ort abgegriffen werden kann oder lokal erzeugt wird.
Das Eingangssignal U ₛ(t) (typischerweise im Bereich von weniger als 15V) respektive Iₛ(t) wird zunächst in einem Analog-Digital-Wandler (ADC) mit einer Abtastrate von typischerweise 5 kHz digitalisiert und anschliessend dieses digitalisierte Zeitsignal Uₛ(t) respektive I ₛ(t) abschnittsweise fouriertransformiert. Zur Analyse von Torsionen erweist sich dabei die Fouriertransformation von jeweils einem Fenster von z. B. 64k Datenpunkten als sinnvoll, bei der Untersuchung von Biegeschwingungen reicht üblicherweise bereits ein Fenster von 1 k Datenpunkten, da die entsprechenden spektralen Merkmale wesentlich gröberer Natur sind.
Das Signal kann ausserdem abgetastet werden mit einer Abtastrate, die der Netzfrequenz entspricht oder einem ganzzahligen Vielfachen der Netzfrequenz, geteilt durch die Polpaarzahl des Generators. Dies bewirkt eine Frequenzverschiebung um eben diese Abtastfrequenz.
Die Biegeschwingungen (Typ A) äussern sich im entsprechenden Spektrum einerseits als Seitenbänder der Wellenspannungs/strom-Harmonischen, wobei die Seitenbänder um die Modulationsfrequenz beabstandet sind. Dies ergibt sich daraus, dass diese Art von Schwingungen Amplitudenmodulationen des Signals Uₛ(t) respektive Iₛ(t) hervorrufen, wobei die Modulationsfrequenz etwa 1 bis 300 Hz betragen kann, und diese Modulationen sowohl auf der Grundharmonischen der Wellenspannung/des Wellenstroms, als auch auf den entsprechenden Harmonischen sichtbar ist. Biegeschwingungen sind so durch einfache Betrachtung respektive Analyse von Linien respektive von deren Seitenbändem möglich. Diese Analyse ist visuell möglich aber auch automatisiert. Ausserdem äussern sich Biegeschwingungen auch als Frequenzlinien im Basisband, d. h. " Seitenbänder " um 0 Hz.
Pendelschwingungen (Typ B) finden üblicherweise um die Grundfrequenz des Rotors statt. Es handelt sich dabei um schnelle Änderungen der Rotationsfrequenz, d. h. um Änderungen auf einer Zeitskala von weniger als 1 sec. Dies führt im Fourierspektrum zu einer Linienverbreiterung auf der Linie der Rotationsfrequenz sowie auf den Harmonischen. Dabei handelt es sich um Verbreiterungen respektive um ein Schieben der Frequenz von im Bereich von 3-4 Promille der Frequenz. Entsprechend kann das Auftreten von Pendelungen an derartigen Linienverbreiterungen visuell oder automatisiert erkannt werden, und insbesondere kann deren Auftreten in zeitlicher Abfolge analysiert werden.
Torsionsschwingungen (Typ C) führen auf Grund der üblicherweise hohen Frequenzen zu Feinstrukturen im Spektrum. Torsionsschwingungen liegen üblicherweise im Bereich von 100 bis 200 Hz und führen zu sehr schnellen Frequenzverschiebungen respektive Phasenverschiebungen auf dieser Zeitskala. Auch diese können wiederum visuell oder automatisch im Spektrum erkannt und analysiert werden.
Die hier beschriebene Methode kann aber nicht nur zur einfachen Beobachtung der Bewegungen der Typen A-C verwendet werden, sondern auch zur Bestimmung von entsprechenden Eigenfrequenzen des Wellenstranges in diesen Bewegungsmoden.
Dazu werden besonders die transienten Frequenzanteile ausgewertet, da nur diese Rückschlüsse auf die Eigenfrequenzen zulassen.
Zu beachten ist in diesem Zusammenhang ausserdem, dass sich die vorliegende Methode ganz besonders zur Langzeitbeobachtung des Verhaltens von Wellensträngen eignet, da der Geräteaufwand relativ klein ist und der Sensor, d. h. die Welle, immer vorhanden ist. So kann aus der graduellen langsamen Veränderung der Eigenfrequenzen einer Welle 2 auf gegebenenfalls vorhandenen Revisionsbedarf geschlossen werden, und es können gezielt entsprechende Revisionen geplant und durchgeführt werden.

### BEZUGSZEICHENLISTE

- 1: Turbine
- 2: Welle
- 3: Wellenlager
- 4: Generator
- 5: niederohmige Erdung, DE-Modul (Driving End Unit)
- 6: RC-Modul (hochohmig)
- 7: Analyseeinheit
- 8: Erdungspunkt von 5
- 9: Erdungspunkt von 6
- 10: Kontaktvorrichtung von 5
- 11: Kontaktvorrichtung von 6
- 12: niederohmiger Widerstand
- 13: hochohmiger Widerstand
- 14: Sicherung
- 15: Sicherung
- 16: Widerstand
- 17: Kapazität
- 18: Messwiderstand (Shunt resistance)

## Patentansprüche

1. Verfahren zur Erfassung von Schwingungen der Welle (2) einer elektrischen Maschine, bei welchem zur Erfassung der Schwingungen die Wellenspannung (Uₛ(t)) und/oder der Wellenstrom (Iₛ(t)) gemessen und analysiert wird, wobei zur Analyse die Wellenspannung (Uₛ(t)) und/oder der Wellenstrom (Iₛ(t)) als Funktion der Zeit (t) gemessen werden, **dadurch gekennzeichnet, dass** die Messung als Abtastung erfolgt mit einer Abtastrate, die der Netzfrequenz entspricht oder ganzzahligen Vielfachen der Netzfrequenz geteilt durch die Polpaarzahl des Generators.

2. Verfahren nach Anspruch 1, **dadurch gekennzeichnet, dass** es sich bei den Schwingungen um Torsionsschwingungen, und/oder Biegeschwingungen und/oder um Pendelungen der Welle handelt.

3. Verfahren nach einem der vorhergehenden Ansprüche, **dadurch gekennzeichnet, dass** die Messung von Wellenspannung und/oder Wellenstrom derart erfolgt, dass an einer ersten Stelle, vor dem Generator (4), der Welle (2) eine Erdung (5) vorgesehen ist, und dass an einer zweiten Stelle, hinter dem Generator (4), der Welle (2) die Wellenspannung (Uₛ(t)) und/oder Wellenstrom (Iₛ(t)) abgegriffen und in einer Analyseeinheit (7) analysiert werden.

4. Verfahren nach Anspruch 3, **dadurch gekennzeichnet, dass** ein hochohmiges RC-Modul (6) vorgesehen ist, über welchem die Wellenspannung (Uₛ(t)) und/oder Wellenstrom (Iₛ(t)) abgegriffen werden.

5. Verfahren nach einem der vorhergehenden Ansprüche, **dadurch gekennzeichnet, dass** zur Analyse von Wellenspannung (Uₛ(t)) und/oder Wellenstrom (Iₛ(t)) das entsprechende Signal (Uₛ(t),Iₛ(t)) in Bezug auf darin enthaltene Frequenzmodulationen und/oder Amplitudenmodulationen und/oder Frequenzlinien im Basisband untersucht wird.

6. Verfahren nach Anspruch 5, **dadurch gekennzeichnet, dass** transiente Vorgänge im Spektrum ausgewertet werden.

7. Verfahren nach einem der vorhergehenden Ansprüche, **dadurch gekennzeichnet, dass** gegebenenfalls nach Demodulation oder Heruntermischen des Signals (Uₛ(t), Iₛ(t)) mit einer Trägerfrequenz, insbesondere mit der Netzfrequenz (ν_{Netz}) und deren ganzzahligen Harmonischen geteilt durch die Anzahl der Polpaare, abschnittsweise fouriertransformiert wird, und das resultierende Spektrum auf Linienverbreiterungen und/oder auf Seitenbänder und/oder auf Frequenzlinien im Basisband analysiert wird.

8. Verfahren nach einem der Ansprüche 5, 6 oder 7, **dadurch gekennzeichnet, dass** das Signal mit einer Abtastrate von 1-10 kHz, insbesondere im Bereich von 5 kHz abgetastet wird, und anschliessend für die Ermittlung von Feinstrukturen, wie sie bei Pendelungen und/oder Torsionen auftreten, vom Signal jeweils Abschnitte von im Bereich von 10k bis 100k Datenpunkte, insbesondere im Bereich von 64k Datenpunkte fouriertransformiert werden, respektive dass für die Ermittlung von Biegeschwingungen jeweils Abschnitte von im Bereich von 0.5k bis 1.5k Datenpunkte, insbesondere im Bereich von 1 k Datenpunkte fouriertransformiert (FFT) werden.

9. Verfahren nach Anspruch 8, **dadurch gekennzeichnet, dass** als Hinweis auf Biegeschwingungen im Spektrum transiente, nichtharmonische Linien bei Frequenzen im Bereich von 1 bis 300 Hz gewertet werden.

10. Verfahren nach einem der Ansprüche 8 oder 9, **dadurch gekennzeichnet, dass** als Hinweis auf Pendelungen transiente Verschiebungen oder Verbreiterungen der Linien bei der Netzfrequenz respektive bei deren harmonischen Vielfachen geteilt durch die Anzahl der Polpaare, gewertet werden.

11. Verfahren nach einem der Ansprüche 8 bis 10, **dadurch gekennzeichnet, dass** als Hinweis auf Torsionsschwingungen transiente Phasenmodulationen gewertet werden.

12. Verfahren nach einem der Ansprüche 6 bis 11, **dadurch gekennzeichnet, dass** zur Erfassung der Eigenfrequenzen des Wellenstranges die transienten Anteile des Spektrums ausgewertet werden.

13. Verfahren nach einem der vorhergehenden Ansprüche, **dadurch gekennzeichnet, dass** aus der Wellenspannung (Uₛ(t)) und/oder dem Wellenstrom (Iₛ(t)) Schwingungskennwerte bestimmt werden.

14. Verfahren nach Anspruch 13, **dadurch gekennzeichnet, dass** es sich bei den Schwingungskennwerten um Schwingungseigenfrequenzen, insbesondere um a) horizontale und/oder vertikale biegekritische Eigenfrequenzen, und/oder um b) Torsionseigenfrequenzen, und/oder um c) Pendelungseigenfrequenzen handelt, wobei optional zusätzlich Amplitude und Phase bei den Eigenfrequenzen ermittelt werden.

15. Verfahren nach Anspruch 14, **dadurch gekennzeichnet, dass** Schwingungseigenfrequenzen als kritisch eingestuft werden, welche selbst oder deren harmonische Vielfache im Bereich von +/- 10% der Nenndrehzahl, bevorzugt im Bereich von +/- 5% der Nenndrehzahl von normalerweise 50 oder 60 Hz liegen.

## Claims

1. Method for detecting vibrations of the shaft (2) of an electrical machine, in which, for the purpose of detecting the vibrations, the shaft voltage (U_{S}(t)) and/or the shaft current (I_{S}(t)) is measured and analyzed, for analysis purposes the shaft voltage (U_{S}(t)) and/or the shaft current (I_{S}(t)) being measured as a function of time (t), **characterized in that** the measurement is carried out in the form of sampling at a sampling rate which corresponds to the system frequency or to integral multiples of the system frequency divided by the number of pole pairs in the generator.

2. Method according to Claim 1, **characterized in that** the vibrations are torsional vibrations and/or bending vibrations and/or oscillations of the shaft.

3. Method according to one of the preceding claims, **characterized in that** the measurement of the shaft voltage and/or the shaft current takes place such that a connection to earth (5) is provided at a first point on the shaft (2), upstream of the generator (4), and **in that**, at a second point on the shaft (2), downstream of the generator (4), the shaft voltage (U_{S}(t)) and/or the shaft current (I_{S}(t)) is tapped off and analyzed in an analysis unit (7).

4. Method according to Claim 3, **characterized in that** a high-resistance RC module (6) is provided, via which the shaft voltage (U_{S}(t)) and/or the shaft current (I_{S}(t)) is tapped off.

5. Method according to one of the preceding claims, **characterized in that**, for the purpose of analyzing the shaft voltage (U_{S}(t)) and/or the shaft current (I_{S}(t)), the corresponding signal (U_{S}(t), I_{S}(t)) is investigated as regards frequency modulations and/or amplitude modulations and/or frequency lines in the baseband, which it contains.

6. Method according to Claim 5, **characterized in that** transient processes in the spectrum are evaluated.

7. Method according to one of the preceding claims, **characterized in that**, possibly after demodulation or down-mixing of the signal (U_{S}(t), I_{S}(t)), sections are subjected to a Fourier transformation at a carrier frequency, in particular at the system frequency (ν_{system}) and the integral harmonics thereof divided by the number of pole pairs, and the resulting spectrum is analysed for instances of line broadening and/or for sidebands and/or for frequency lines in the baseband.

8. Method according to one of Claims 5, 6 and 7, **characterized in that** the signal is sampled at a sampling rate of 1-10 kHz, in particular in the region of 5 kHz, and, then, for the purpose of determining fine structures, as occur in the case of oscillations and/or torsions, in each case sections of the signal of in the range from 10k to 100k data points, in particular in the region of 64k data points, are subjected to a Fourier transformation, or **in that**, for the purpose of determining bending vibrations, in each case sections of in the range from 0.5k to 1.5k data points, in particular in the region of 1k data points, are subjected to a Fourier transformation (FFT).

9. Method according to Claim 8, **characterized in that** transient, non-harmonic lines at frequencies in the range from 1 to 300 Hz are considered to be an indication of bending vibrations in the spectrum.

10. Method according to either of Claims 8 and 9, **characterized in that** transient shifts or instances of broadening of the lines at the system frequency or at harmonic multiples thereof divided by the number of pole pairs are considered to be an indication of oscillations.

11. Method according to one of Claims 8 to 10, **characterized in that** transient phase modulations are considered to be an indication of torsional vibrations.

12. Method according to one of Claims 6 to 11, **characterized in that** the transient components of the spectrum are evaluated for the purpose of detecting the natural frequencies of the shaft assembly.

13. Method according to one of the preceding claims, **characterized in that** vibration characteristics are determined from the shaft voltage (Uₛ(t)) and/or the shaft current (Iₛ(t)).

14. Method according to Claim 13, **characterized in that** the vibration characteristics are natural vibration frequencies, in particular a) horizontal and/or vertical, bending-critical natural frequencies, and/or b) natural torsion frequencies, and/or c) natural oscillation frequencies, in addition the amplitude and phase at the natural frequencies optionally being determined.

15. Method according to Claim 14, **characterized in that** natural vibration frequencies are categorized as critical if they themselves or their harmonic multiples are in the region of +/- 10% of the rated speed, preferably in the region of +/-5% of the rated speed of normally 50 or 60 Hz.

## Revendications

1. Procédé pour l'enregistrement des oscillations de l'arbre (2) d'une machine électrique, dans lequel on mesure et on analyse la tension de l'arbre (Uₛ(t)) et/ou le courant de l'arbre (Iₛ(t)) pour l'enregistrement des oscillations, la tension de l'arbre (Uₛ(t)) et/ou le courant de l'arbre (Iₛ(t)) étant mesuré en fonction du temps (t) pour l'analyse, **caractérisé en ce que** la mesure est réalisée par détection à un taux de détection correspondant à la fréquence du réseau ou à des multiples entiers de la fréquence du réseau divisés par le nombre de paires de pôles du générateur.

2. Procédé selon la revendication 1, **caractérisé en ce que** les oscillations sont des oscillations de torsion et/ou des oscillations de flexion et/ou des mouvements pendulaires de l'arbre.

3. Procédé selon l'une des revendications précédentes, **caractérisé en ce que** la mesure de la tension de l'arbre et/ou du courant de l'arbre a lieu de telle sorte qu'à un premier emplacement de l'arbre (2), avant le générateur (4), une mise à la terre (5) est prévue, et **en ce qu'**à un deuxième emplacement sur l'arbre (2), derrière le générateur (4), on détecte la tension de l'arbre (Uₛ(t)) et/ou le courant de l'arbre (Iₛ(t)) et on les analyse dans une unité d'analyse (7).

4. Procédé selon la revendication 3, **caractérisé en ce qu'**un module RC (6) à valeur ohmique élevée est prévu permettant la détection de la tension de l'arbre (Uₛ(t)) et/ou du courant de l'arbre (Iₛ(t)).

5. Procédé selon l'une des revendications précédentes, **caractérisé en ce que** pour l'analyse de la tension de l'arbre (Uₛ(t)) et/ou du courant de l'arbre (Iₛ(t)), on étudie le signal correspondant (Uₛ(t), Iₛ(t)) en ce qui concerne les modulations de fréquence et/ou les modulations d'amplitude et/ou les lignes de fréquence dans la bande de base, qui y sont contenues.

6. Procédé selon la revendication 5, **caractérisé en ce qu'**on traite les processus transitoires dans le spectre.

7. Procédé selon l'une des revendications précédentes, **caractérisé en ce que** le cas échéant, après démodulation ou mélange du signal (Uₛ(t), Iₛ(t)) pour obtenir un signal de fréquence plus basse, avec une fréquence de porteuse, notamment avec la fréquence du réseau (V_{réseau}) et ses harmoniques entières divisées par le nombre de paires de pôles, on réalise une transformation de Fourier par sections et on analyse le spectre résultant en ce qui concerne l'élargissement des lignes et/ou en ce qui concerne les bandes latérales et/ou en ce qui concerne les lignes de fréquence dans la bande de base.

8. Procédé selon l'une des revendications 5, 6 ou 7, **caractérisé en ce que** le signal est détecté à un taux de détection de 1 - 10 kHz, notamment dans la plage de 5 kHz, et on réalise ensuite la transformation de Fourier de sections du signal de points de données dans la plage de 10 k à 100 k, notamment de points de données dans la plage de 64 k pour la détermination de structures fines comme celles apparaissant lors de mouvements pendulaires et/ou de torsions, respectivement **en ce qu'**on réalise ensuite la transformation de Fourier (FFT) de sections de points de données dans la plage de 0,5 k à 1,5 k, notamment de points de données dans la plage de 1 k pour la détermination d'oscillations de flexion.

9. Procédé selon la revendication 8, **caractérisé en ce que** dans le spectre, des lignes transitoires non harmoniques de fréquences dans la plage de 1 à 300 Hz sont interprétées comme une indication d'oscillations de flexion.

10. Procédé selon l'une des revendications 8 ou 9, **caractérisé en ce que** des décalages ou des élargissements transitoires des lignes pour la fréquence du réseau, respectivement pour ses multiples harmoniques divisés par le nombre de paires de pôles, sont interprétées comme une indication de mouvements pendulaires.

11. Procédé selon l'une des revendications 8 à 10, **caractérisé en ce que** des modulations de phase transitoires sont interprétées comme une indication d'oscillations de torsion.

12. Procédé selon l'une des revendications 6 à 11, **caractérisé en ce qu'**on traite les composantes transitoires du spectre pour enregistrer les fréquences propres de l'arbre de transmission.

13. Procédé selon l'une des revendications précédentes, **caractérisé en ce qu'**on détermine les valeurs caractéristiques d'oscillation à partir de la tension de l'arbre (Uₛ(t)) et/ou du courant de l'arbre (Iₛ(t)).

14. Procédé selon la revendication 13, **caractérisé en ce que** dans le cas des valeurs caractéristiques d'oscillation, il s'agit de fréquences propres d'oscillation, notamment a) de fréquences propres critiques de flexions horizontales et/ou verticales et b) de fréquences propres de torsion et/ou c) de fréquences propres de mouvements pendulaires, l'amplitude et la phase étant de plus déterminées en option pour les fréquences propres.

15. Procédé selon la revendication 14, **caractérisé en ce que** les fréquences propres d'oscillation sont qualifiées de critiques, et qu'elles-mêmes ou leurs multiples harmoniques se situent dans la plage de +/-10% de la vitesse de rotation nominale, de préférence dans la plage de +/-5% de la vitesse de rotation nominale de 50 ou 60 Hz normalement.
